# EUROPEAN PATENT SPECIFICATION

(11) **EP 2 530 943 B1**
(45) Date of publication and mention of the grant of the patent: **25.03.2015**
(21) Application number: 12153615.5
(22) Date of filing: 02.02.2012
(51) Int. Cl.: H04N 21/24, H04N 21/231, H04N 21/226, H04N 21/436, G06F 17/30

(54) **Server, data distribution system and data distribution method**
Server, Datenverteilungssystem und Datenverteilungsverfahren
Serveur, système de distribution de données et procédé de diffusion de données

(30) Priority: 31.05.2011 JP 2011122357; 27.07.2011 JP 2011164605
(43) Date of publication of application: 05.12.2012
(73) Proprietor: Kabushiki Kaisha Toshiba, Tokyo 105-8001 (JP)
(72) Inventor: Miyoshi, Eisuke, Tokyo (JP)
(74) Representative: Hoffmann Eitle

(56) References cited:
- US-A1- 2007 174 883
- "UPNP DEVICE ARCHITECTURE 1.0 VERSION 1.0.1", UNIVERSAL PLUG AND PLAY (UPNP), , 2 December 2003 (2003-12-02), pages 1-73, XP008121804, Retrieved from the Internet: URL:http://hackipedia.org/Protocols/Intern et/UPnP/UPnP%20Device%20Architecture%20v1. 0.1%20Dec%202003.pdf

## Description

### FIELD

Embodiments described herein relate generally to a server, data distribution system and data distribution method for distributing various materials including video, music, photographs or the like from a server to a client.

### BACKGROUND

In recent years, mechanisms are becoming widespread as client-server systems provided with a server that stores data such as video and music, and clients (players) having a playback function capable of mutually exchanging materials (hereinafter referred to as "data") such as video, music, and photographs among mainly home appliances over a network, such as DLNA (abbreviation of "Digital Living Network Alliance") with the server and clients arranged on the network so as to distribute data stored in the server to the clients on the network. With such a mechanism, video or the like can be played back even at a place remote from a place where a file thereof is stored.

According to, for example, guidelines of the DLNA, home appliances and computers of different manufacturers can exchange data such as still images, video and music on a network. Connection to the network for that purpose may be any one of wired connection through Ethernet (registered trademark) and wireless connection via a wireless LAN.

Examples of target devices following the DLNA guidelines include DMS (abbreviation of "Digital Media Server") as a server and DMP (abbreviation of "Digital Media Player") as a client. A DMS is a device provided with functions of saving and distributing digital content or a video recording function such as a digital camera, video camera, cellular phone with a camera in addition to a personal computer or the like. On the other hand, a DMP is a device that plays back content and is a television set that plays back digital broadcast data and the like or a playback apparatus such as an audio player.

However, while a client is playing back a material (data) on the server, if the server side starts processing of higher priority than distribution of data (e.g., video recording) and the server side thereby stops the data distribution in response to new access from the client, the client side cannot know what is happening in the server located at a remote place and a problem is that data is not distributed and the user gets confused about operations.

### BRIEF DESCRIPTION OF THE DRAWINGS

Fig. 1 is a flowchart illustrating operation of a server according to a first embodiment;
Fig. 2 is a diagram of a data distribution system of the first embodiment;
Fig. 3 is a flowchart illustrating an example of operation of the data distribution system of the first embodiment;
Fig. 4 is a diagram illustrating main parts of the operation described in Fig. 2 and Fig. 3;
Fig. 5 is a flowchart illustrating operation of a server according to a second embodiment;
Fig. 6 is a diagram illustrating a data distribution system of the second embodiment;
Fig. 7 is a flowchart illustrating an example of operation of the data distribution system of the second embodiment; and
Fig. 8 is a diagram illustrating main parts of the operation described in Fig. 6 and Fig. 7.

### DETAILED DESCRIPTION

A server according to an embodiment is a server that can distribute plural pieces of file data stored in a storage section to a client over a network and can publish the server's own server name to the network and includes a data distribution section configured to distribute file data in response to a distribution request for the file data from the client over the network and a server name publishing section configured to publish the server's own server name to the network and publish, when an amount of the file data distributed from the data distribution section over the network reaches a maximum allowable amount of file data simultaneously distributed, a server name different from the server's own server name.

A data distribution method according to an embodiment for distributing plural pieces of file data stored in a storage section from a server to a client over a network includes the server publishing the server's own server name to the network, the server distributing the file data in response to a distribution request for the file data from the client over the network and the server publishing, when the amount of the file data distributed over the network reaches a maximum allowable amount of file data simultaneously distributed, a server name different from the server's own server name.

Hereinafter, embodiments of the present invention will be described with reference to the accompanying drawings.

Suppose a data distribution system according to the following embodiments is a client-server system according to a DLNA, which will be described assuming that a client and a server are connected to each other over a local area network (hereinafter simply referred to as "network") and the mutual connection is based on a wireless scheme using, for example, a wireless LAN. Each server is a server that can distribute plural pieces of file data stored in a storage section (hereinafter simply referred to as "data") to the client over a network and publish the server's own server name to the network.

In the following descriptions, suppose at least one of several servers is, for example, a DLNA-compatible television receiver having a video recording function and the client is a playback apparatus that can play back data acquired from the server and display the data on a screen.

### [First embodiment]

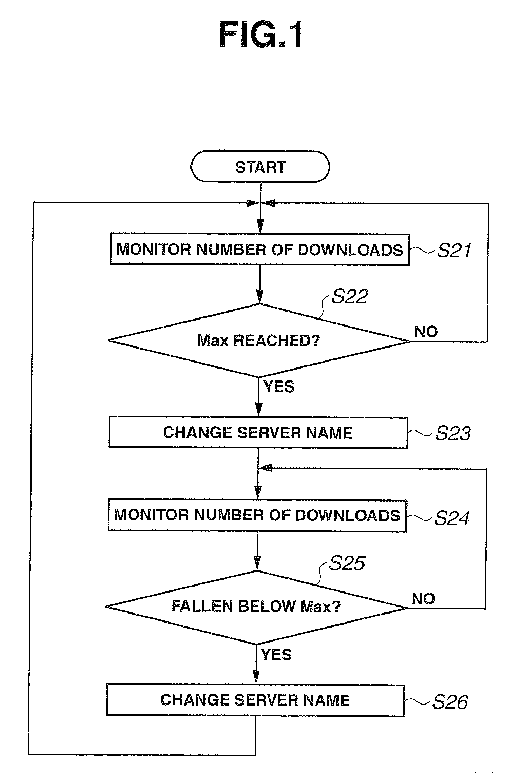

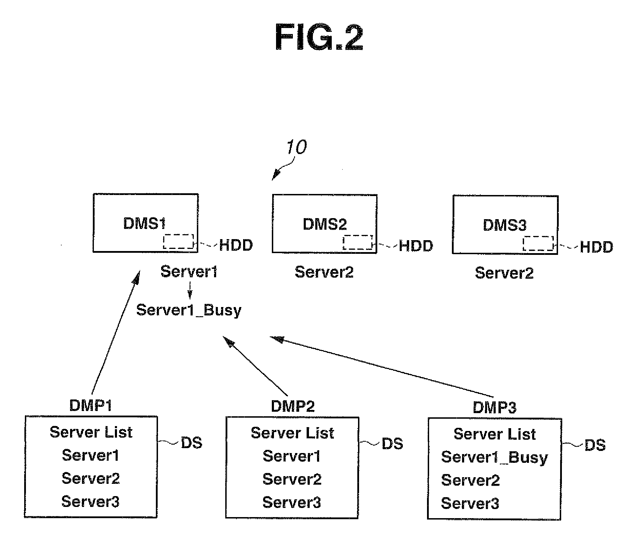

Fig. 1 shows a flowchart illustrating operation of a server according to a first embodiment. Furthermore, Fig. 2 is a diagram illustrating a data distribution system according to the present first embodiment. The present embodiment is a client-server system provided with a server that can change a server name thereof without interrupting communication (distribution) between the server and the client.

First, a schematic configuration of the data distribution system will be described with reference to Fig. 2.

A data distribution system 10 shown in Fig. 2 is provided with DMS1, DMS2 and DMS3 as plural (three in the figure) servers that store data, and DMP1, DMP2 and DMP3 as plural (three in the figure) clients having a playback function. Each server is internally provided with a storage section such as a hard disk drive (hereinafter referred to as "HDD"). The storage section such as HDD may also be connected outside the server. DMS1, the server, is a server according to the present first embodiment and is, for example, a broadcasting receiving apparatus such as a DLNA-compatible television receiver that can receive and record digital television broadcasting and change a server name thereof without interrupting communication. DMS2 and DMS3 are servers having functions similar to those of conventional servers and are, for example, broadcasting receiving apparatuses such as DLNA-compatible digital recorders that can receive digital television broadcasting and have a video recording function. In the present first embodiment, DMS 1 is the only server that can change the server name thereof without interrupting communication.

The mutual network connection between the server and the client of the data distribution system 10 may be based on a wired or wireless scheme. All DMS1, DMS2 and DMS3 have a server name publishing section for publishing each server name to the network and all DMP1, DMP2 and DMP3 connected to the network detect DMS1, DMS2 and DMS3, display a list of DMS1, DMS2 and DMS3 (also denoted as "server list") on each display section, thereby allowing a user on the client side to refer to the server list and specify a desired server. All the servers can distribute their respective stored data to a client of DMP1, DMP2 or DMP3 that has sent a request. Solid line arrows in Fig. 2 from DMP1, DMP2 and DMP3 to DMS1 mean access from each client to the server.

In the present embodiment, DMS1 of the three servers can change the server name to be published to the network according to a state of the server (state of the server that changes depending on whether distribution or video recording or the like is in progress). The state of the server here mainly refers to the state of load such as whether a number of downloads is large or small, a number of images being recorded in addition to whether simply distribution or video recording is in progress. Whether the number of downloads is large or small corresponds, for example, to whether or not a maximum number of possible simultaneous downloads m, which is a threshold, is exceeded. Suppose server names of DMS1, DMS2 and DMS3 are represented as Server 1, Server 2 and Server 3 respectively.

When changing the name of a server to be published to the network, an alternate name, for example, "Server 1-Busy" is generated in which a character string representing the state of DMS1 (e.g., "-Busy") is included in the server name Server 1 according to the state of DMS1. "Busy" means that the server is busy and cannot receive further requests (in other words, further distribution is not possible). To simply express that video recording is in progress, "Recording", which represents video recording, that is, writing is included in the server name and the name may be, for example, "Server 1-Recording."

In such a configuration, while the client is playing back data from DMS1, the DMS1 side may start processing to be given high priority (e.g., video recording), and as a result, distribution should be stopped (that is, distribution suspended) in response to new access (or request) from the client or even when video recording is not in progress, if there are many accesses to one DMS 1 from plural clients and DMS1 needs to suspend distribution for a number of accesses exceeding a maximum number of possible downloads, DMS1 itself changes the server's own server name (e.g., adding "-Busy" to the server name), and can thereby cause the server name to be displayed on a screen on the client side and notify the client side that further distribution is not possible (that is, distribution disabled).

In a state in which DMS1, DMS2 and DMS3 and DMP1, DMP2 and DMP3 are connected to the network and operation of each device of the server-client system is enabled, since the respective server names are published from DMS1, DMS2 and DMS3 to the network, screens DS of respective display sections of DMP1, DMP2 and DMP3 display server names Server 1, Server 2 and Server 3 of the accessible DMS1, DMS2 and DMS3 as a server list. DMP1, DMP2 and DMP3 can each select and access any one server from the server names Server 1, Server 2 and Server 3 at the request of each user on the DMP side and receive distribution of data which is a material such as video, music or photograph stored in the accessed server. DMP1, DMP2 and DMP3 each receive and play back desired data from the selected server.

When a scheduled time for recording such as video recording comes, the HDD in DMS1 starts a recording operation of data such as reserved video or music. When this recording operation starts, data is stored in the HDD of the server. After that, when at least one of DMP1, DMP2 and DMP3 makes access to the server DMS 1 for a data distribution request, since the server cannot respond to accesses from all clients, especially during the recording operation, the number of downloads from the server to the client is limited so as not to exceed a predetermined number. That is, DMS1 limits the maximum number of possible downloads m of the server when recording processing such as video recording is in progress. When, for example, the recording operation is not in progress, the server DMS1 can simultaneously distribute data in response to accesses from all the three DMP 1, DMP2 and DMP3, but when the scheduled time comes and the recording operation starts, because of limitations to performance that DMS 1 can transmit data to a client (e.g., when the HDD is externally connected, limitations to the communication capacity such as maximum data transfer speed between DMS1 and the HDD), a maximum number of distributable clients is limited to two of the three clients DMP1, DMP2 and DMP3. In this case, even when DMP3, a third client, accesses the server DMS1, data is not distributed to DMP3. In such a case, it remains unknown to the user who is an audience, for what reason data is not distributed to the client DMP3 who made the third access in the conventional distribution system. That is, means for transmitting the state of a server to a client DMP is conventionally not included in the DLNA guidelines, and therefore not shown.

Regarding such a problem, according to the present embodiment, DMS1 changes a server name of the server to be published to the network according to a state of DMS1 (e.g., video recording state or distribution disabled state). When the server name is changed according to a server state, it is preferable to generate an alternate name by including a character string expressing the state of the server in the original server name. That is, the alternate name may be rewritten or substituted for the original server name.

Next, operation of the server will be described with reference to a flowchart in Fig. 1.

In this flowchart, the server monitors the number of downloads, the server side starts processing of higher priority than data distribution (e.g., video recording), the number of downloads from the server to the client is limited to a predetermined maximum number of possible downloads, and as a result, when the server side stops data distribution in response to new access from the client (distribution suspended), the change of the server state is indicated by a change of the server name, the changed server name is published to the network so that it is notified to the user on the client side.

The operation after the server receives a request from the client side and starts data distribution to the client side will be described using Fig. 1.

First, the server monitors the number of downloads at this point in time (step S21) and decides whether or not the number of downloads has reached a maximum number m (Max) which is the maximum number of possible downloads (step S22). When the number of downloads has not reached the maximum number m in step S22, the process returns to step S21. The maximum number m is predetermined in view of limitations to server performance. The processing in steps S21 and S22 constitutes an accomplished number of possible simultaneous downloads decision section that decides whether or not the number of downloads of file data has reached a number of possible simultaneous downloads.

The maximum number m (Max) which is the maximum number of possible downloads differs when the server enters a state of video recording processing of high priority and when the server does not enter a state of video recording processing and only a number of accesses from the client increases. Generally, a maximum number (m2) when video recording processing is not in progress is set to a greater value than a maximum number (m1) when video recording processing is in progress. Thus, the maximum number m corresponding to the processing state of the server is predetermined, for example, in a predetermined table.

When the number of downloads in step S22 has reached the maximum number m at that time, the process moves to step S23 to change the server name. For example, the server name Server 1 is changed to an alternate name Server 1-Busy, which is published to the network. This allows the client user to know that load of the server has reached the maximum number m (Max) and the number of downloads cannot be further increased.

That is, the processing in steps S21 to S23 constitutes a server name publishing section that generates and publishes a server name different from the server's own server name when the number of downloads of file data over the network reaches the number of possible simultaneous downloads.

The server then monitors the number of downloads in the above-described state (step S24) and decides whether or not the number of downloads falls below the maximum number m (Max) (step S25). When the number of downloads does not fall below the maximum number in step S25, the process returns to step S24. The processing in steps S24 and S25 constitutes an unaccomplished number of possible simultaneous downloads decision section that decides whether the number of downloads of the file data has fallen below the number of possible simultaneous downloads.

When the number of downloads has fallen below the maximum number m (Max) in step S25, the process moves to step S26 to change the server name. For example, the server name Server 1-Busy is changed back to the original name Server 1 and published to the network. This allows the client user to know that the load of the server has not reached the maximum number m (Max) and the number of downloads can be increased further. That is, the processing in steps S24 to S26 constitutes a server name publishing section configured to change, when the number of downloads of file data falls below the number of possible simultaneous downloads after reaching the number of possible simultaneous downloads, the different server name Server 1-Busy to the server's own server name Server 1.

After the end of step S26, the process returns to step S21.

The number of possible simultaneous downloads has been described above as an example of a capacity of possible simultaneous distribution. Furthermore, although a case has been described where all distribution targets are, for example, high resolution (HD) video, in the case of music or photographs, tens of pieces may be actually distributed simultaneously. When HD video, standard resolution (SD) video, music and photograph are mixed, the number of possible downloads may vary depending on the situation. Management according to a fixed number of downloads needs to be performed so as not to exceed "constraints" set according to a situation of mixture of types of content distributed, the mixing ratio between the types of content, but when the server side comes to a situation of exceeding the "constraints," it is possible to inform the client side of such a situation.

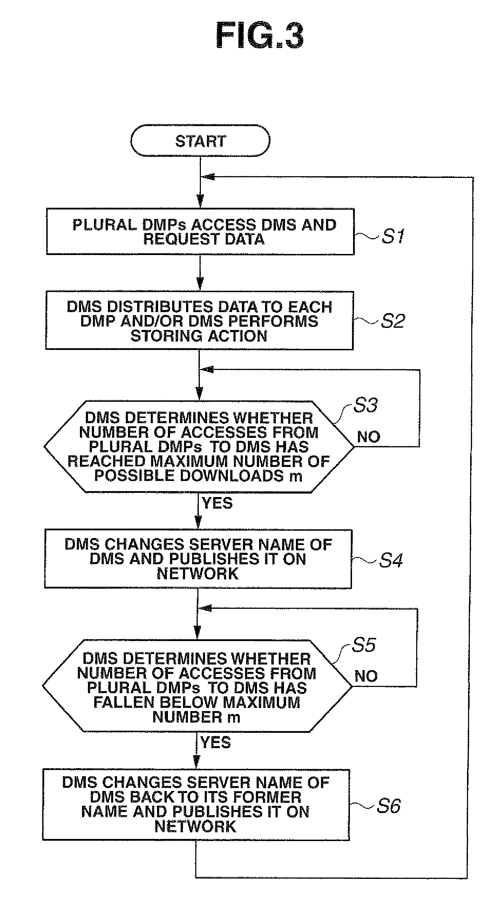

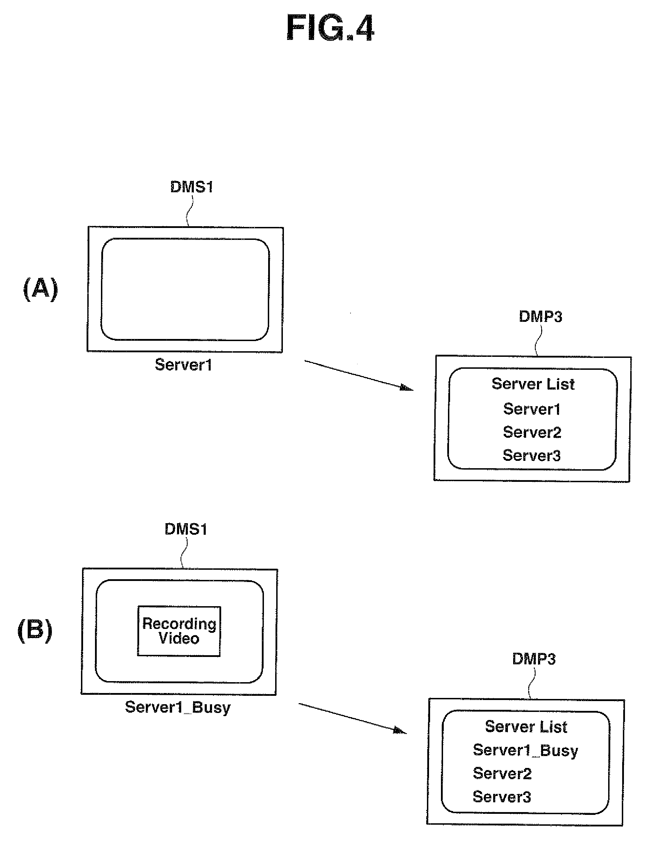

Next, operation of the data distribution system according to the first embodiment shown in Fig. 2 will be described with reference to Fig. 3 and Fig. 4.

Fig. 3 is a flowchart illustrating an example of operation of the data distribution system according to the present first embodiment.

Before describing the operation in Fig. 3, a premise thereof will be described schematically. A list of plural DMS servers published on the network is displayed on each of the plural DMPs. Assuming here that such a server list is displayed in each DMP as shown in Fig. 2, when a server name is changed later, the server name is published on the network every time, and the list of server names with changed DMSs can be consequently displayed on the display section of each DMP through an update in each DMP or an equivalent action or operation.

Next, the operation in Fig. 3 will be described.

There are plural (three in the figure) servers DMS1, DMS2 and DMS3, and suppose plural (three in the figure) DMPs; DMP1, DMP2 and DMP3 access DMS1 out of the three DMSs according to the present first embodiment, for example, sequentially and request data stored in DMS1 (step S1). In this case, suppose the first DMP1 accesses DMS1 to receive distribution of data, then DMP2 accesses the same DMS1 to receive distribution of data (step S2) or the first DMP1 accesses DMS1 to receive distribution of data and DMS1 starts recording operation such as video recording when the data distribution is in progress (step S2). This step S2 constitutes a data distribution section configured to distribute file data to a client over the network according to the file data distribution request.

According to the number of data downloads (may also be called "number of DMP accesses") at DMS1 in that case and the presence or absence of recording operation in that case, DMS1 calculates a maximum number m indicating the number of DMP requests for which distribution is possible when another DMP (e.g., DMP3) makes access later, that is, a maximum number of possible downloads m corresponding to the server state at that time with reference to a table (table of correspondence) created beforehand, that is, from a table showing a relationship between plural states of DMS I and their respective maximum numbers of possible downloads. The maximum number m, that is, the maximum number of possible downloads is predetermined in view of performance limitations of DMS1. Thus, DMS1 determines whether or not the number of current accesses, that is, the number of downloads has reached the maximum number of possible downloads m (step S3).

In step S3, if the maximum number of possible downloads m in the state of DMS1 in that case has been reached, it is assumed that further distribution from DMS1 is not possible, the server name Server 1 of DMS1 is changed to an alternate name Server 1-Busy, which is published on the network. When another client (e.g., DMP3) makes access later, Server 1-Busy is displayed as the server name of DMS1 corresponding to the access of DMP3 on a screen DS of the display section of DMP3 that made access (step S4), and the user of DMP3 can thereby know that DMS1 is too busy with other processing to perform distribution. After that, it is determined whether the number of accesses (may also be referred to as the "number of downloads") from plural DMPs has decreased from the maximum number m (step S5), and when the number of accesses has decreased from the maximum number m, the server name of DMS1 is changed back to the former name Server 1 (step S6), published on the network and the process returns to step S 1.

The operation example in Fig. 3 has been described assuming that DMS1 is a server having sufficient performance capable of simultaneously performing data distribution and video recording processing (however, the number of downloads for new data distribution may be limited during video recording). On the other hand, when DMS1 is a low-performance server and DMS1 receives a command for video recording processing with high priority while DMS1 is distributing data to a certain one DMP in response to access therefrom, DMS1 does not have performance enough to simultaneously perform data distribution and video recording, and DMS1 suspends all data distribution to DMP and performs only the video recording processing. Even when all data distribution by DMS1 is suspended, DMS1 publishes Server 1-Busy on the network as the alternate name of the server name Server 1, and can thereby inform that distribution is currently disabled.

Fig. 4 plainly shows operation of DMS1 in response to access from the third DMP3 in distribution operation (e.g., operation when the maximum number of possible downloads m of DMS1 is 2 when video recording processing starts) performed between DMS1 and DMP1, DMP2 and DMP3 described in Fig. 2 and Fig. 3, and shows a state (A) in which distribution by DMS1 is enabled and a state (B) in which distribution by DMS1 is disabled. In the examples shown in Fig. 2 and Fig. 3, since only DMS1 out of DMS1, DMS2 and DMS3 can distinguish between the enabled and disabled states of data distribution and inform the distinction by changing the server name, only the relationship between DMS1 and DMP3 that made the last access shown in Fig. 2 is extracted and shown here.

In Fig. 4, (A) shows a state in which the server names Server 1, Server 2 and Server 3 of DMS1, DMS2 and DMS3 are displayed on the screen of DMP3. In this case, the server name of DMS1 is not changed but is the normal server name Server 1, which allows the user of DMP3 to know that DMS 1 can distribute data such as video, music or still image in response to access from DMP3.

On the other hand, (B) shows a state in which the server names Server 1-Busy, Server 2 and Server 3 of DMS1, DMS2 and DMS3 are displayed on the screen of DMP3. In this case, since the server name of DMS1 is changed to the Server 1-Busy from the normal server name Server 1, the user of DMP3 can know that DMS1 cannot perform distribution in response to access from DMP3.

Here, the server name Server 1-Busy which is different from the normal server name Server 1 results from adding a predetermined character string "-Busy" to the server's own server name Server 1.

The respective functions of the server and the client can be implemented by software, and, for example, Windows (registered trademark) 7 can be made to function as a server as well as a client.

As described above, when DMS1 is performing recording operation, for example, a server name Server 1-Recording, which is different from the normal server name Server 1, is generated and published. Since this different server name includes a character string "-Recording" indicating that the server is writing data to the storage section, the user can know the reason that DMS1 is disabled to perform distribution.

According to the first embodiment, the server changes a server name to be published on the network according to the state of the server, and can thereby inform, when the state of the server changes, the state to a client using an existing mechanism of publishing an existing server name (e.g., mechanism based on the DLNA guidelines here).

### [Second embodiment]

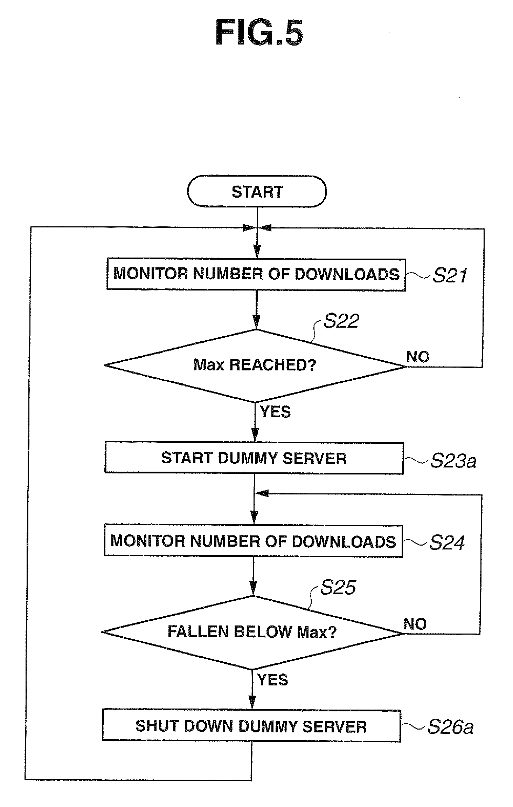

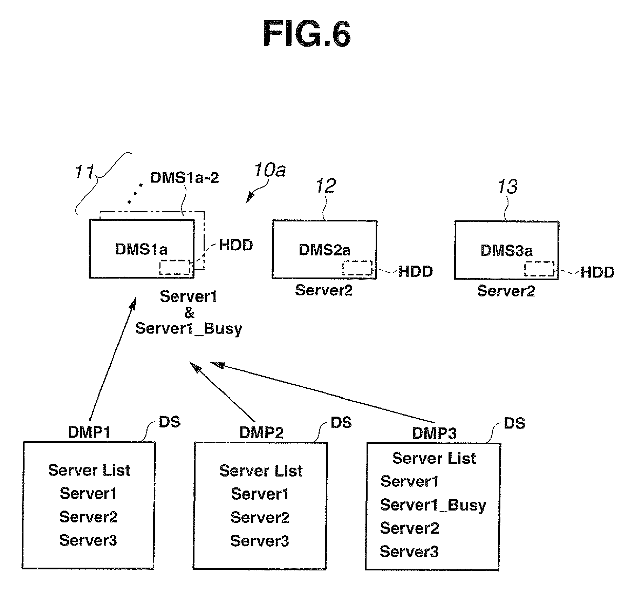

Fig. 5 is a flowchart illustrating operation of a server according to a second embodiment. Furthermore, Fig. 6 is a diagram illustrating a data distribution system according to the second embodiment. The present embodiment is a client-server system provided with a server capable of adding a changed server name as a different server name without interrupting communication (distribution) between the server and a client.

First, a schematic configuration of the data distribution system will be described with reference to Fig. 6.

Fig. 6 is a diagram illustrating the data distribution system of the second embodiment. The present embodiment is a client-server system capable of starting plural DMSs on one hardware apparatus 11. For a first DMS (reference numeral DMS1a), the hardware apparatus 11 making up DMS1 starts and generates a second DMS (reference numeral DMS1a-2) as a dummy server when the load of the first DMS becomes heavy and the number of downloads exceeds, for example, a maximum number m. The second DMS (reference numeral DMS1a-2) may newly start a DMS that operates normally instead of a dummy. The server name of the first DMS (reference numeral DMSIaj is Server 1, whereas the server name of the second DMS (reference numeral DMS1a-2) is, for example, Server 1_Busy. As a result, two server names, server name Server 1 and server name Server 1_Busy are published on the network from one hardware apparatus 11 in the server list. When server names Server 2 and Server 3 of DMS2a and DMS3a are also added, the server list includes four server names.

The present second embodiment is also applicable to a server that has to functionally suspend communication (distribution) when changing a server name by adding one more changed server name to change the server state.

In Fig. 6, a data distribution system 10a is provided with plural (three in the figure) servers DMS1a, DMS2a and DMS3a configured to store data and plural (three in the figure) clients DMP1, DMP2 and DMP3 configured to have a playback function. The server DMS1a is a server according to the present second embodiment and is a broadcasting receiving apparatus such as a DLNA-compatible television receiver that can receive television broadcasting and has a video recording function. The server DMS I a is located in one hardware apparatus 11 and can further start at least one DMS (e.g., DMSIa-2 in Fig. 6). Hardware apparatuses 12 and 13 are provided with the server DMS2a and the server DMS3a respectively. The servers DMS2a and DMS3a are servers having functions similar to conventional functions, and are, for example, broadcasting receiving apparatuses such as DLNA-compatible digital recorders that can receive normal television broadcasting. Clients DMP1, DMP2 and DMP3 are similar to those in the first embodiment.

Therefore, when the second DMS (DMS1a-2) is started, the server list corresponding to the entire data distribution system 10a includes server names Server 1, Server 1_Busy, Server 2 and Server 3.

The mutual network connection between the server and the client of the data distribution system 10a may be any one of wired and wireless schemes. When the load on DMS1a is light and the number of downloads does not exceed the maximum number m, all of DMS1a, DMS2a and DMS3a publish their respective original server names Server 1, Server 2 and Server 3 on the network and DMP1, DMP2 and DMP3 connected on the network detect the server names Server 1, Server 2 and Server 3, display a server list on each display section, and the user on the client side can specify a server. Furthermore, all of DMS1a, DMS2a and DMS3a can distribute stored data to a client that makes a request in response to access from DMP1, DMP2 and DMP3.

Furthermore, when the load on DMS1a becomes heavier and the number of downloads exceeds the maximum number m, the server names Server 1, Server 2 and Server 3 of DMS1a, DMS1a-2, DMS2a and DMS3a are published on the network and all of DMP 1, DMP2 and DMP3 connected to the network detect the server names Server 1, Server 1_Busy, Server 2 and Server 3, display a server list on each display section, and therefore two server names Server 1 and Server 1_Busy are displayed regarding DMS1a, and DMS1a can thereby inform the user of DMP that DMS1a is too busy to increase the number of downloads.

In the present second embodiment, DMS1a can generate a changed server name (alternate name) to be published on the network other than the original server name according to the server state. Here, "server state" mainly refers to a state of load such as whether the number of downloads is large or small or whether video recording is in progress or not. Whether the number of downloads is large or small means that the number of downloads is large when the number of downloads exceeds the maximum number m of the number of possible simultaneous downloads, which is a threshold, and the number of downloads is small when the number of downloads does not exceed the maximum number m of the number of possible simultaneous downloads.

When generating a changed server name (alternate name) to be published on the network other than the original server name, this DMS1a generates, for example, an alternate name Server 1_Busy by including a character string (e.g. "-Busy") expressing a state of the server DMS1 in the server name Server 1 according to the state of the server DMS 1.

In such a configuration, when the DMS1a side starts processing that should be done with high priority (e.g., video recording) while the client is playing back data from DMS1a, and DMS1a consequently has to suspend distribution in response to new access from the client or when DMS1a needs to suspend distribution for accesses exceeding the maximum number of possible downloads because there are many accesses to one DMS1a from plural clients even when DMS1a is not video recording, DMS1a-2, which is a second server, is started, a changed server name of DMS1a (e.g., "-Busy" added to the original server name) is newly provided, and it is thereby possible to inform the client side that the server cannot perform distribution.

Next, operation of the server will be described with reference to the flowchart in Fig. 5.

In this flowchart, when the server monitors the number of downloads, the server side starts processing of higher priority than data distribution (e.g., video recording) and limits the number of downloads from the server to the client to a predetermined maximum number m, the server side consequently suspends data distribution in response to new access from the client (distribution suspended), the server starts a dummy server and publishes the name of the dummy server (created by changing the server name) together with the original server name on the network, and can thereby inform a change in the state of the aforementioned server to the user on the client side.

Operation after the server receives a request from the client side and starts data distribution to the client side will be described.

First, the server monitors the number of downloads (step S21) and determines whether or not the number of downloads has reached the maximum number m (Max) (step S22). When the number of downloads has not reached the maximum number m in step S22, the process returns to step S21. The maximum number m (Max), which is a maximum upper limit of possible simultaneous downloads, differs between a case where the server enters video recording processing of high priority and a case where the server does not enter video recording processing and only the number of accesses from the client increases. Generally, a maximum number (m2) in the case where the server does not enter video recording processing is set to a value greater than a maximum number (m1) in the case where the server enters video recording processing.

When the number of downloads has reached the maximum number m in step S22, the process moves to step S23a and the hardware apparatus 11 starts a dummy server. Therefore, assuming the alternate name Server 1-Busy changed from the server name Server 1 as the server name of the dummy server, the hardware apparatus 11 publishes the server name Server 1 and the server name Server 1-Busy on the network. It is thereby possible to inform the user of the client that the load of the server has reached the maximum number m (Max) and the number of downloads cannot be increased further. That is, the server name Server 1-Busy which is different from the server's own server name Server 1 is a server name generated by the apparatus in which a server is started by starting one more server.

That is, the processing in steps S21 to S23a constitutes a server name publishing section configured to generate, when the number of downloads of file data over the network has reached the number of possible simultaneous downloads, a server name different from the server's own server name and publishes the server name.

The server monitors the number of downloads in the above-described state (step S24) and determines whether or not the number of downloads has fallen below the maximum number m (Max) (step S25). When the number of downloads has not fallen below the maximum number m (Max) in step S25, the process returns to step S24.

When the number of downloads has fallen below the maximum number m (Max) in step S25, the process moves to step S26a and shuts down the dummy server. For example, of the two server names Server 1 and Server 1-Busy, the server name Server 1-Busy is erased, the server name is changed back to the original server name Server 1 only and published on the network. This makes it possible to inform the user of the client that the load of the server has not reached the maximum number m (Max) and the number of downloads can be increased further. That is, the processing in steps S24 to S26a constitutes a server name publishing section configured to change, when the number of downloads of file data falls below the number of possible simultaneous downloads after reaching the number of possible simultaneous downloads, the different server name Server 1-Busy to the server's own server name Server 1.

After step S26a ends, the process returns to step S21.

Next, operation of the second embodiment will be described with reference to Fig. 6 to Fig. 7.

When the servers DMS1a, DMS2a and DMS3a, and clients DMP1, DMP2 and DMP3 are connected to the network, the respective devices of the client-server system are enabled to perform operation and DMS1a, DMS2a and DMS3a are enabled to perform distribution, the server names Server 1, Server 2 and Server 3 of DMS1a, DMS2a and DMS3a specifiable as a server list are displayed on the screen DS of the respective display sections of DMP 1, DMP2 and DMP3. When each of DMP1, DMP2 and DMP3 selects and accesses any one server from the server names Server 1, Server 2 and Server 3 at the request of each user to thereby have data, which is a material such as video, music, photograph stored in the accessed server, distributed. Each of DMP1, DMP2 and DMP3 receives and plays back desired data from the selected server.

When a scheduled time of recording comes, a hard disk HDD of DMS1a as a storage section starts operation of recording data such as reserved video or music. Once this recording operation starts, when at least one of DMP1, DMP2 and DMP3 makes access for a data distribution request during recording operation of stored data (including also data being recorded), DMS1a denies accesses from all clients, that is, DMS1a limits accesses so that the number of accesses from clients does not exceed a predetermined maximum number. In other words, the server DMS1a defines a maximum number m of possible simultaneous downloads for clients beforehand during recording operation such as video recording. Therefore, when, for example, recording operation is not in progress, DMS1a limits the number of downloads to, for example, two out of three clients DMP 1, DMP2 and DMP3 due to performance limitations of DMS1a when the scheduled time comes and the recording operation starts even when simultaneous data distribution to the respective clients is possible in response to accesses from all the three DMP1, DMP2 and DMP3. This means that even if a third DMP3 accesses DMS1a, data will not be distributed to DMP3. In such a case, in a conventional distribution system, the third DMP3 that makes access cannot know for what reason data is not distributed from DMS1a. In other words, means for transmitting the server state to DMP, which is a client, is not particularly described in the DLNA guidelines.

To solve such a problem, when adding a changed server name of a server according to the server state, the present second embodiment starts a second server as a dummy server in addition to the first server DMS1a in the one apparatus 11, and thereby generates a server name of the dummy server. As a result, Server 1_Busy is generated as the server name of one more server, that is, the second server started later in addition to the original server name Server 1.

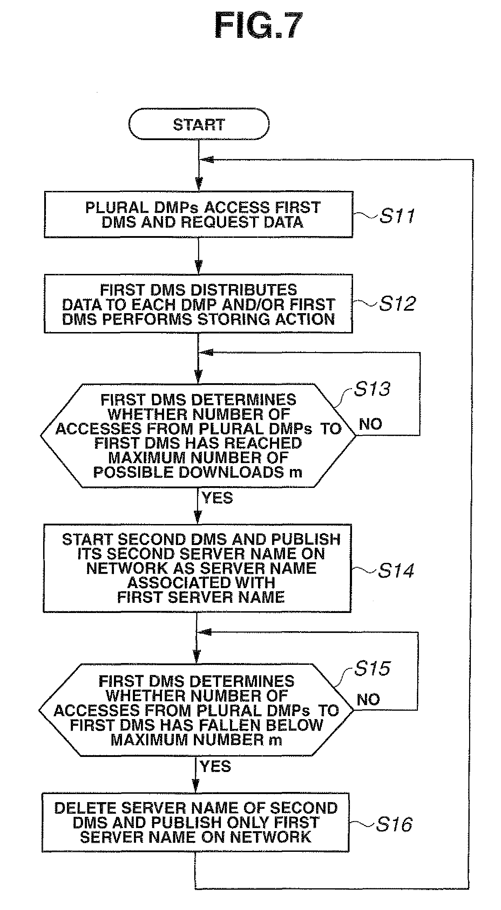

Fig. 7 is a flowchart illustrating operation of the server DMS1a.

As servers, there are plural (three in the figure) servers DMS1a, DMS2a and DMS3a, and suppose plural (three in the figure) DMP1, DMP2 and DMP3 sequentially access the first DMS1a according to the present embodiment out of the three servers (step S 11) and request data stored in the first DMS1a. In that case, suppose the first DMP1 accesses the first DMS1a and DMP1 receives data distribution first, and then, DMP2 accesses the first DMS1a and DMP2 receives data distribution (step S2) or the first DMP1 accesses the first DMS1a and DMP1 receives data distribution first and the first server DMS1a starts recording operation such as video recording during the distribution (step S12).

According to the number of data downloads (also referred to as the "number of DSP accesses") at the first DMS1a in that case and the presence or absence of recording operation at the first DMS I a, the first DMS I a calculates a maximum number m regarding the number of DMP requests for which distribution is possible with reference to a table (table of correspondence) created beforehand, that is, a maximum number of possible downloads m corresponding to the server state at that time from a table showing a relationship between plural states of the first DMS1a and corresponding maximum numbers of possible downloads when another DMP (e.g., DMP3) makes access later. The maximum number m is predetermined in view of performance limitations of the first server DMS1a. Thus, DMS1a determines whether or not the current number of accesses, that is, the number of downloads has reached the maximum number of possible downloads m (step S13).

In step S13, when the number of downloads has reached the maximum number of possible downloads m at that time, the first DMS1a assumes that further distribution is not possible and starts the second DMS1a-2 and publishes the server name Server 1-Busy thereof on the network. Thus, the alternate name Server 1-Busy is published in addition to the original server name Server 1. When access is made from another DMP (e.g., DMP3) later, the screen of the display section of DMP3 that made access displays not only the server name Server 1 of the first DMS1a corresponding to the access but also the server name Server 1-Busy as the second server (e.g., dummy server) as an alternate name associated with the original server name Server 1 (step S14), and the user of DMP3 can thereby recognize the Server 1 and the Server 1-Busy simultaneously and know that DMS1a is too busy with other processing to perform distribution. After that, it is determined whether the number of accesses (which may also be referred to as the "number of downloads") from plural DMPs has decreased from the maximum number m (step S 15), and when the number of accesses has decreased from the maximum number m, the second DMS1a-2 is suspended, the server name Server 1-Busy is erased, the server name is changed back to the server name Server 1 of the first DMS1a only (step S16), published on the network and the process returns to step S11.

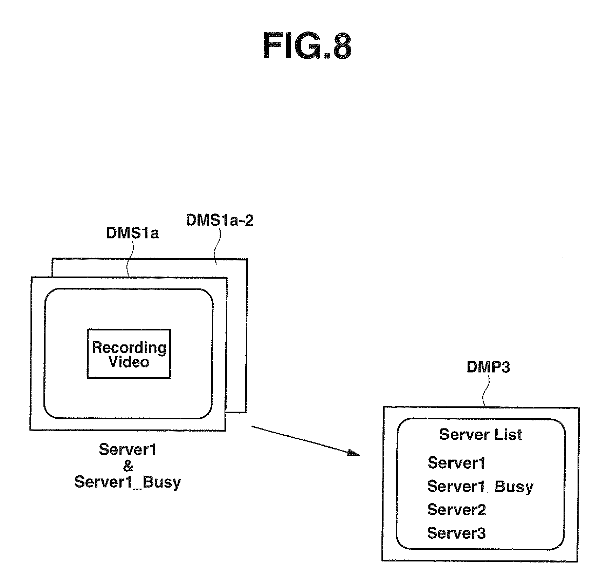

Fig. 8 plainly shows operation of the server DMS1a corresponding to access of the third DMP3 in the distribution operation performed between DMS1a and DMP1, DMP2 and DMP3 described in Fig. 6 and Fig. 7, and shows that DMS1a is changed from a distribution enabled state to a distribution disabled state. In the embodiment shown in Fig. 6 and Fig. 7, the dummy server DMS1a-2 is started for DMS1a out of DMS1a, DMS2a and DMS3a, an alternate server name changed from the server name of DMS1a is added as the server name thereof, which makes it possible to inform whether data distribution is possible or not, and therefore only the relationship between DMS1a and DMP3 in Fig. 6 is extracted and shown here.

In Fig. 8, the server names Server 1, Server 1-Busy, Server 2 and Server 3 of DMS1a, DMS1a-2, DMS2a and DMS3a are displayed on the screen of DMP3, and two server names; the server name Server 1 of DMS1a and the server name Server 1-Busy of the added dummy server DMS1a-2 are displayed, and the user can thereby know that the first DMS1a cannot perform distribution in response to access from DMP3.

According to the second embodiment, the server generates a changed server name to be published on the network other than the original server name according to the server state, and although the server has to temporarily suspend communication (distribution) to change the server name, the server can inform the state to the client using an existing mechanism (e.g., within the range of the DLNA guidelines) when the server state is changed without interrupting the communication.

As for the publication of the alternate name on the network according to the aforementioned embodiment, the alternate name may be published until a predetermined time elapses after a change of the server state or the alternate name may only be published until a predetermined number of accesses are made after a change of the server state or the alternate name may only be published to a terminal that performed communication before a change of the server state or the like.

Furthermore, the above-described example has been described using DMS and DMP as an example of DLNA, but a configuration using DMC (abbreviation of Digital Media Controller) and DMR (abbreviation of Digital Media Renderer) may also be used. Furthermore, the present embodiment is applicable not only to the DLNA but also to a distribution system between a server and a client following rules determined other than by the DLNA.

As described above, according to the aforementioned two embodiments, it is possible to provide a server, a data distribution system and a data distribution method that can inform, when a server state is changed, the state to a client using an existing mechanism.

While certain embodiments have been described, these embodiments have been presented by way of example only, and are not intended to limit the scope of the inventions. Indeed, the novel methods and devices described herein may be embodied in a variety of other forms; furthermore, various omissions, substitutions and changes in the form of the methods and devices described herein may be made without departing from the spirit of the inventions. The accompanying claims and their equivalents are intended to cover such forms or modifications as would fall within the scope and spirit of the inventions.

## Claims

1. A server that can distribute plural pieces of file data stored in a storage section to a client over a network and publish the server's own server name on the network, comprising:
a data distribution section configured to distribute the file data according to a file data distribution request from the client over the network; and
a server name publishing section configured to publish the server's own server name on the network and publish, when an amount of the file data distribution from the data distribution section over the network reaches a capacity of possible simultaneous distribution, a server name different from the server's own server name.

2. The server according to claim 1,
wherein when the amount of the file data distribution falls below the capacity of possible simultaneous distribution after reaching the capacity of possible simultaneous distribution, the server name publishing section changes the different server name to the server's own server name.

3. The server according to claim 1 or 2,
wherein the capacity of possible simultaneous distribution is a capacity predetermined based on a maximum data transfer speed between the storage section and the server.

4. The server according to any one of claims 1 to 3,
wherein the amount of the file data distribution from the data distribution section is a number of downloads and the capacity of possible simultaneous distribution is a number of possible simultaneous downloads.

5. The server according to any one of claims 1 to 4,
wherein the different server name is the server's own server name to which a predetermined character string is added.

6. The server according to claim 5,
wherein when the server is writing data to the storage section, the character string is a character string representing the writing.

7. The server according to any one of claims 1 to 4,
wherein the different server name is a server name generated by starting one more server in an apparatus in which the server is started.

8. The server according to any one of claims 1 to 7,
wherein the server is a broadcasting receiving apparatus.

9. A data distribution system comprising:
the server according to any one of claims 1 to 8; and
a client configured to be connected to the server over a network, play back file data distributed from the server and comprise a display section for displaying the server name.

10. The data distribution system according to claim 9,
wherein the client selects the server name displayed on the display section and thereby transmits the file data distribution request to the server.

11. The data distribution system according to claim 9 or 10,
wherein the amount of the file data distribution from the data distribution section is a number of downloads and the capacity of possible simultaneous distribution is a number of possible simultaneous downloads.

12. A data distribution method for distributing plural pieces of file data stored in a storage section from a server to a client over a network, comprising:
the server publishing the server's own server name on the network;
the server distributing the file data in response to a file data distribution request from the client over the network; and
the server publishing, when an amount of the file data distribution over the network reaches a capacity of possible simultaneous distribution, a server name different from the server's own server name.

13. The data distribution method according to claim 12,
further comprising the client playing back the file data distributed from the server and displaying the server name.

14. The data distribution method according to claim 12 or 13,
wherein the different server name is a server name generated by starting one more server in an apparatus in which the server is started.

15. The data distribution method according to any one of claims 12 to 14,
wherein when the amount of the file data distribution falls below the capacity of possible simultaneous distribution after reaching the capacity of possible simultaneous distribution, the different server name is changed to the server's own server name.

## Patentansprüche

1. Server, der mehrere Teile von Dateidaten, die in einem Speicherabschnitt gespeichert sind, über ein Netzwerk an einen Client verteilen und den eigenen Servernamen des Servers in dem Netzwerk veröffentlichen kann, welcher Folgendes umfasst:
einen Datenverteilungsabschnitt, der zum Verteilen der Dateidaten gemäß einer Dateidatenverteilungsanfrage von dem Client über das Netzwerk konfiguriert ist; und
einen Servernamen-Veröffentlichungsabschnitt, der zum Veröffentlichen des eigenen Servernamens des Servers in dem Netzwerk und zum Veröffentlichen, wenn eine Menge der Dateidatenverteilung von dem Datenverteilungsabschnitt über das Netzwerk eine Kapazität der möglichen gleichzeitigen Verteilung erreicht, eines anderen Servernamens als dem eigenen Servernamen des Servers konfiguriert ist.

2. Server nach Anspruch 1, wobei, wenn die Menge der Dateidatenverteilung unter die Kapazität der möglichen gleichzeitigen Verteilung fällt, nachdem die Kapazität der möglichen gleichzeitigen Verteilung erreicht wurde, der Servernamen-Veröffentlichungsabschnitt den anderen Servernamen in den eigenen Servernamen des Servers ändert.

3. Server nach Anspruch 1 oder 2, wobei die Kapazität der möglichen gleichzeitigen Verteilung eine Kapazität ist, die aufgrund einer maximalen Datenübertragungsgeschwindigkeit zwischen dem Speicherabschnitt und dem Server vorbestimmt ist.

4. Server nach einem der Ansprüche 1 bis 3, wobei die Menge der Dateidatenverteilung von dem Datenverteilungsabschnitt eine Zahl von Downloads ist und die Kapazität der möglichen gleichzeitigen Verteilung eine Zahl von möglichen gleichzeitigen Downloads ist.

5. Server nach einem der Ansprüche 1 bis 4, wobei der andere Servername der eigene Servername des Servers ist, zu dem eine vorbestimmte Zeichenkette hinzugefügt wurde.

6. Server nach Anspruch 5, wobei, wenn der Server Daten in den Speicherabschnitt schreibt, die Zeichenkette eine Zeichenkette ist, welche das Schreiben darstellt.

7. Server nach einem der Ansprüche 1 bis 4, wobei der andere Servername ein Servername ist, der durch das Starten eines weiteren Servers in einer Vorrichtung, in welcher der Server gestartet wird, erzeugt wird.

8. Server nach einem der Ansprüche 1 bis 7, wobei der Server eine Übertragungsempfangsvorrichtung ist.

9. Datenverteilungssystem, welches Folgendes umfasst:
den Server nach einem der Ansprüche 1 bis 8; und
einen Client, der zum Verbinden mit dem Server über ein Netzwerk, Abspielen von Dateidaten, die von dem Server verteilt wurden, und Umfassen eines Anzeigebereiches zum Anzeigen des Servernamens konfiguriert ist.

10. Datenverteilungssystem nach Anspruch 9, wobei der Client den Servernamen auswählt, der in dem Anzeigeabschnitt angezeigt ist, und dadurch die Dateidatenverteilungsanfrage an den Server übermittelt.

11. Datenverteilungssystem nach Anspruch 9 oder 10, wobei die Menge der Dateidatenverteilung von dem Datenverteilungsabschnitt eine Zahl von Downloads ist und die Kapazität der möglichen gleichzeitigen Verteilung eine Zahl möglicher gleichzeitiger Downloads ist.

12. Datenverteilungsverfahren zum Verteilen mehrerer Teile von Dateidaten, die in einem Speicherabschnitt gespeichert sind, von einem Server an einen Client über ein Netzwerk, welches Folgendes umfasst:
den Server, der den eigenen Servernamen des Servers in dem Netzwerk veröffentlicht;
den Server, der die Dateidaten als Reaktion auf eine Dateidatenverteilungsanfrage von dem Client über das Netzwerk verteilt; und
den Server, der, wenn eine Menge der Dateidatenverteilung über das Netzwerk eine Kapazität der möglichen gleichzeitigen Verteilung erreicht, einen anderen Servernamen als den eigenen Servernamen des Servers veröffentlicht.

13. Datenverteilungsverfahren nach Anspruch 12, welches ferner die Client-Wiedergabe der Dateidaten, die vom Server verteilt wurden, und das Anzeigen des Servernamens umfasst.

14. Datenverteilungsverfahren nach Anspruch 12 oder 13, wobei der andere Servername ein Servername ist, der durch das Starten eines weiteren Servers in einer Vorrichtung, in welcher der Server gestartet wird, erzeugt wird.

15. Datenverteilungsverfahren nach einem der Ansprüche 12 bis 14, wobei, wenn die Menge der Dateidatenverteilung unter die Kapazität der möglichen gleichzeitigen Verteilung fällt, nachdem die Kapazität der möglichen gleichzeitigen Verteilung erreicht wurde, der andere Servername in den eigenen Servernamen des Servers geändert wird.

## Revendications

1. Serveur apte à distribuer plusieurs éléments de données de fichiers stockés dans une section de stockage à un dispositif client sur un réseau, et à publier le nom de serveur propre du serveur sur le réseau, comprenant :
une section de distribution de données configurée de manière à distribuer les données de fichiers selon une demande de distribution de données de fichiers en provenance du dispositif client sur le réseau ; et
une section de publication de noms de serveurs configurée de manière à publier le nom de serveur propre du serveur sur le réseau, et à publier, lorsqu'une quantité de la distribution de données de fichiers de la section de distribution de données sur le réseau atteint une capacité de distribution simultanée potentielle, un nom de serveur distinct du nom de serveur propre du serveur.

2. Serveur selon la revendication 1,
dans lequel, lorsque la quantité de la distribution de données de fichiers tombe en dessous de la capacité de distribution simultanée potentielle après avoir atteint la capacité de distribution simultanée potentielle, la section de publication de noms de serveurs remplace le nom de serveur distinct par le nom de serveur propre du serveur.

3. Serveur selon la revendication 1 ou 2,
dans lequel la capacité de distribution simultanée potentielle correspond à une capacité prédéterminée basée sur une vitesse de transfert de données maximale entre la section de stockage et le serveur.

4. Serveur selon l'une quelconque des revendications 1 à 3,
dans lequel la quantité de la distribution de données de fichiers de la section de distribution de données correspond à un nombre de téléchargements vers l'aval, et la capacité de distribution simultanée potentielle correspond à un nombre de téléchargements vers l'aval simultanés potentiels.

5. Serveur selon l'une quelconque des revendications 1 à 4,
dans lequel le nom de serveur distinct correspond au nom de serveur propre du serveur auquel est ajouté une chaîne de caractères prédéterminée.

6. Serveur selon la revendication 5,
dans lequel, lorsque le serveur écrit des données sur la section de stockage, la chaîne de caractères correspond à une chaîne de caractères représentant l'écriture.

7. Serveur selon l'une quelconque des revendications 1 à 4,
dans lequel le nom de serveur distinct est un nom de serveur généré en démarrant un serveur supplémentaire dans un appareil dans lequel le serveur est démarré.

8. Serveur selon l'une quelconque des revendications 1 à 7,
dans lequel le serveur correspond à un appareil de réception de radiodiffusion.

9. Système de distribution de données, comprenant :
le serveur selon l'une quelconque des revendications 1 à 8 ; et
un dispositif client configuré de manière à être connecté au serveur sur un réseau, à lire des données de fichiers distribuées à partir du serveur, et comprenant une section d'affichage destinée à afficher le nom de serveur.

10. Système de distribution de données selon la revendication 9,
dans lequel le dispositif client sélectionne le nom de serveur affiché sur la section d'affichage et transmet par conséquent la demande de distribution de données de fichiers au serveur.

11. Système de distribution de données selon la revendication 9 ou 10,
dans lequel la quantité de la distribution de données de fichiers de la section de distribution de données correspond à un nombre de téléchargements vers l'aval, et la capacité de distribution simultanée potentielle correspond à un nombre de téléchargements vers l'aval simultanés potentiels.

12. Procédé de distribution de données destiné à distribuer plusieurs éléments de données de fichiers stockés dans une section de stockage d'un serveur à un dispositif client sur un réseau, comprenant les étapes ci-dessous dans lesquelles :
le serveur publie le nom de serveur propre du serveur sur le réseau ;
le serveur distribue les données de fichiers en réponse à une demande de distribution de données de fichiers en provenance du dispositif client sur le réseau ; et
le serveur publie, lorsqu'une quantité de la distribution de données de fichiers sur le réseau atteint une capacité de distribution simultanée potentielle, un nom de serveur distinct du nom de serveur propre du serveur.

13. Procédé de distribution de données selon la revendication 12,
comprenant en outre l'étape dans laquelle le dispositif client lit les données de fichiers distribuées à partir du serveur et affiche le nom de serveur.

14. Procédé de distribution de données selon la revendication 12 ou 13,
dans lequel le nom de serveur distinct correspond à un nom de serveur généré en démarrant un serveur supplémentaire dans un appareil dans lequel le serveur est démarré.

15. Procédé de distribution de données selon l'une quelconque des revendications 12 à 14,
dans lequel, lorsque la quantité de la distribution de données de fichiers tombe en dessous de la capacité de distribution simultanée potentielle après avoir atteint la capacité de distribution simultanée potentielle, le nom de serveur distinct est remplacé par le nom de serveur propre du serveur.
